# EUROPÄISCHE PATENTANMELDUNG

(11) **EP 3 241 689 A1**
(43) Veröffentlichungstag der Anmeldung: **08.11.2017**
(21) Anmeldenummer: 17156824.9
(22) Anmeldetag: 20.02.2017
(51) Int. Cl.: B60C 9/22, B60C 9/00, D02G 3/48

(54) **FAHRZEUGLUFTREIFEN**

(30) Priorität: 03.05.2016 DE 102016207560
(71) Anmelder: Continental Reifen Deutschland GmbH, 30165 Hannover (DE)
(72) Erfinder: Reese, Wolfgang, 31228 Peine (DE)
(74) Vertreter: Finger, Karsten

(57) **Zusammenfassung**

Die Erfindung betrifft einen Fahrzeugluftreifen mit einer Karkasse, einem Laufstreifen und einem Gürtel, welcher an seiner radial äußeren Seite durch eine Gürtelbandage abgedeckt ist, wobei die Gürtelbandage zumindest eine Gürtelbandagenlage mit etwa in Umfangsrichtung angeordneten Festigkeitsträgern aufweist und wobei die Festigkeitsträger Corde aus miteinander verdrehten Multifilamentgarnen sind.

Zur Verbesserung der Haltbarkeit des Fahrzeugluftreifens bestehen die Corde aus wenigstens drei miteinander verdrehten Multifilamentgarnen.

## Beschreibung

Die Erfindung betrifft einen Fahrzeugluftreifen mit einer Karkasse, einem Laufstreifen und einem Gürtel, welcher an seiner radial äußeren Seite durch eine Gürtelbandage abgedeckt ist, wobei die Gürtelbandage zumindest eine Gürtelbandagenlage mit etwa in Umfangsrichtung angeordneten Festigkeitsträgern aufweist und wobei die Festigkeitsträger der Gürtelbandagenlage Corde aus miteinander verdrehten Multifilamentgarnen sind.

Es ist hinreichend bekannt, eine Gürtelbandage in Fahrzeugluftreifen anzuordnen. Die Gürtelbandage ist ein- oder mehrlagig ausgebildet, deckt zumindest die Gürtelränder ab und weist parallel und etwa in Umfangsrichtung verlaufende Festigkeitsträger in Form von in Gummi eingebetteten Corden auf. "Etwa in Umfangsrichtung" meint einen Winkel von 0° bis 5° in Bezug auf die Reifenumfangsrichtung.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in einer der fachkundigen Person bekannten Art mit einer Imprägnierung vorbehandelt sind, in Längsrichtung einen Kalander oder einen Extruder zur Ummantelung mit der Kautschukmischung durchläuft. Oder aber es werden Festigkeitsträger verwendet, die klebrig imprägniert sind und ohne eine kalandrierte Haftmischung verarbeitet werden können.

Die Gürtelbandage dient insbesondere im Hochgeschwindigkeitseinsatz dazu, eine Erhebung des Reifen durch die im Fahrbetrieb auftretenden Fliehkräfte zu begrenzen. Zudem sollen die Festigkeitsträger der Gürtelbandage die Gürtellagen, insbesondere die Gürtelkanten für die Schnelllauffestigkeit und Dauerhaltbarkeit niederhalten. Als Festigkeitsträgermaterialien werden insbesondere Polyamide und Polyester eingesetzt.

Aus der DE 33 08 966 A1 ist ein Fahrzeugluftreifen gemäß des Oberbegriffes bekannt. Die Gürtelbandagenlage des Fahrzeugluftreifens weist Garne aus einem Multifilamentgarn oder Corde aus zwei miteinander verdrehten Multifilamentgarnen mit einem Gesamttiter von maximal 1400 dtex auf.

Aus der DE 10 2007 040 674 A1 sind Corde der Konstruktion 470x2 als Festigkeitsträger für die Gürtelbandagenlage bekannt.

Die Corde der Gürtelbandagenlage werden im Gürtelkantenbereich und insbesondere neben der Gürtelkante konstruktionsbedingt gestaucht. Kompressionsbeanspruchung ist, unabhängig vom Material der Festigkeitsträger, nachteilig für die Ermüdungsbeständigkeit des Cordes, wodurch im Gürtelkantenbereich Cordbrüche auftreten können. Die Cordbrüche wirken sich nachteilig auf die Haltbarkeit des Reifens aus.

Es ist die Aufgabe der vorliegenden Erfindung, einen Fahrzeugluftreifen mit einer Gürtelbandage bereitzustellen, welche eine verbesserte Haltbarkeit aufweist.

Gelöst wird die Aufgabe erfindungsgemäß dadurch, dass die Corde aus wenigstens drei miteinander verdrehten Multifilamentgarnen bestehen.

Der Cord, der in der Gürtelbandagenlage eines erfindungsgemäßen Reifens eingesetzt ist, weist eine Konstruktion aus drei, vier oder mehr Multifilamentgarnen auf. Dabei sind die Multifilamentgarne für sich verdreht und alle Multifilamente zum Cord endverdreht.
Aufgrund der Geometrie des Cordes aus drei oder mehr verdrehten Multifilamentgarnen weist dieser eine erhöhte Ermüdungsbeständigkeit auf. Denn durch die Verdrehung der Garne und der Endverdrehung zum Cord hat dieser eine federähnliche Wirkung, welche auf Stauchungen haltbarer reagiert.

Vorzugsweise weist der Cord die Konstruktion x3 oder x4 auf, ist also aus drei oder vier Multifilamentgarne zum Cord verdreht. Hierdurch weisen die einzelnen Garne eine Feinheit auf, welche nicht zu dünn und damit nicht zu teuer sind. Zu dünne Garne wären teurer, da der Garnhersteller bei zu dünnen Garnen pro Zeiteinheit weniger Masse produzieren kann.

Zweckmäßig ist es, wenn der Cord die Konstruktion 940x3 aufweist und vorzugsweise einen Cord der Konstruktion 1400x2 ersetzt. Der Modul in der Gürtelbandagenlage bleibt in etwa gleich, die Ermüdungsbeständigkeit der Corde ist verbessert.

Alternativ weist der Cord die Konstruktion 350x3 auf und ersetzt vorzugsweise einen Cord der Konstruktion 470x2. Der Modul in der Gürtelbandagenlage bleibt in etwa gleich, die Ermüdungsbeständigkeit der Corde ist verbessert.

Wiederum alternativ weist der Cord die Konstruktion 700x3 auf und ersetzt vorzugsweise einen Cord der Konstruktion 940x2. Der Modul in der Gürtelbandagenlage bleibt in etwa gleich, die Ermüdungsbeständigkeit der Corde ist verbessert.

Wiederum alternativ weist der Cord die Konstruktion 235x3 auf und ersetzt vorzugsweise einen Cord der Konstruktion 470x2. Der Modul in der Gürtelbandagenlage bleibt in etwa gleich, die Ermüdungsbeständigkeit der Corde ist verbessert.

Zweckmäßig ist es, wenn der Cord aus Multifilamentgarnen gleichen Materials oder Multifilamentgarnen unterschiedlichen Materials besteht.

Vorteilhaft ist es, wenn der Cord aus Multifilamentgarnen gleichen Garntiters besteht.

Vorteilhaft hinsichtlich der Ermüdungsbeständigkeit ist es, wenn der Cord symmetrisch verdreht ist.

Vorteilhaft ist es, wenn der Twistfaktor α eines jeden Multifilamentgarnes oder des Cordes in einem Bereich von 100 bis 250, vorzugsweise in einem Bereich von 120 bis 180 liegt, wobei α = Twist [t/m] · (Feinheit [tex]/ 1000)^{1/2}. Der Twistfaktor ist ein Maß für die Drehung pro Meter, bezogen auf die Feinheit des Cordes.

Ein bevorzugtes Ausführungsbeispiel eines Cordes für die Gürtelbandage eines erfindungsgemäßen Fahrzeugluftreifens weist auf:
- Material: PA6.6
- Kordkonstruktion: 350x3 dtex
- Twist: 400 t/m, symmetrisch
- Twistfaktor: 130

## Patentansprüche

1. Fahrzeugluftreifen mit einer Karkasse, einem Laufstreifen und einem Gürtel, welcher an seiner radial äußeren Seite durch eine Gürtelbandage abgedeckt ist, wobei die Gürtelbandage zumindest eine Gürtelbandagenlage mit etwa in Umfangsrichtung angeordneten Festigkeitsträgern aufweist und wobei die Festigkeitsträger der Gürtelbandagenlage Corde aus miteinander verdrehten Multifilamentgarnen sind,
**dadurch gekennzeichnet, dass**
die Corde aus wenigstens drei miteinander verdrehten Multifilamentgarnen bestehen.

2. Fahrzeugluftreifen nach Anspruch 1, **dadurch gekennzeichnet, dass** die Corde die Konstruktion 940x3 aufweisen und vorzugsweise Corde der Konstruktion 1400x2 ersetzen.

3. Fahrzeugluftreifen nach Anspruch 1, **dadurch gekennzeichnet, dass** die Corde die Konstruktion 350x3 aufweisen und vorzugsweise Corde der Konstruktion 470x2 ersetzen.

4. Fahrzeugluftreifen nach Anspruch 1, **dadurch gekennzeichnet, dass** die Corde die Konstruktion 700x3 aufweisen und vorzugsweise Corde der Konstruktion 940x2 ersetzen.

5. Fahrzeugluftreifen nach Anspruch 1, **dadurch gekennzeichnet, dass** die Corde die Konstruktion 235x3 aufweisen und vorzugsweise Corde der Konstruktion 470x2 ersetzen.

6. Fahrzeugluftreifen nach zumindest einem der vorangehenden Ansprüche, **dadurch gekennzeichnet, dass** die Corde aus Multifilamentgarnen gleichen Materials oder Multifilamentgarnen unterschiedlichen Materials bestehen.

7. Fahrzeugluftreifen nach zumindest einem der vorangehenden Ansprüche, **dadurch gekennzeichnet, dass** die Corde aus Multifilamentgarnen gleichen Garntiters bestehen.

8. Fahrzeugluftreifen nach zumindest einem der vorangehenden Ansprüche, **dadurch gekennzeichnet, dass** die Corde symmetrisch sind.

9. Fahrzeugluftreifen nach zumindest einem der vorangehenden Ansprüche, **dadurch gekennzeichnet, dass** der Twistfaktor α eines jeden Multifilamentgarnes oder des Cordes in einem Bereich von 100 bis 250, vorzugsweise in einem Bereich von 120 bis 180 liegt, wobei α = Twist [t/m] · (Feinheit [tex]/ 1000)^{1/2}.
